# EUROPÄISCHE PATENTSCHRIFT

(11) **EP 0 924 165 B1**
(45) Veröffentlichungstag und Bekanntmachung des Hinweises auf die Patenterteilung: **18.06.2003**
(21) Anmeldenummer: 98122604.6
(22) Anmeldetag: 27.11.1998
(51) Int. Cl.: C01B 17/38

(54) **Verfahren zur Herstellung von wasserfreiem Natriumsulfid**
Method for producing anhydrous sodium sulfide
Procédé de fabrication de sulfure de sodium déshydraté

(30) Priorität: 16.12.1997 DE 19755760
(43) Veröffentlichungstag der Anmeldung: 23.06.1999
(73) Patentinhaber: Degussa AG, 40474 Düsseldorf (DE)
(72) Erfinder: Magiera, Robert Dr., 60388 Frankfurt (DE); Alt, Christian, 63571 Gelnhausen (DE); Rasig, Gerhard, 60388 Frankfurt (DE); Münzenberg, Jörg Dr., 63457 Hanau (DE); Batz-Sohn, Christoph Dr., 63452 Hanau (DE); Goedecke, Ralf Dr., 63517 Rodenbach (DE); Deschler, Ulrich Dr., 63877 Sailauf (DE); Knapp, Volker, 61440 Oberursel (DE); Rützel, Karl-Heinz, 50354 Hürth (DE)

(56) Entgegenhaltungen:
- EP-A- 0 345 136
- EP-A- 0 361 998
- JAN Y ANDERSSON, MICHAEL AZOULAY: "Mechanisms and Kinetics of the Thermal Decomposition of Sodium Sulphide Pentahydrate under Controlled Water Vapour Pressure" J. CHEM. SOC. DALTON TRANS.,1986, Seiten 469-475, XP002094813
- PATENT ABSTRACTS OF JAPAN vol. 008, no. 012 (M-269), 19. Januar 1984 & JP 58 175751 A (HITACHI ZOSEN KK), 15. Oktober 1983

## Beschreibung

Die Erfindung betrifft die Herstellung von wasserfreiem Natriumsulfid durch Erhitzen von wasserhaltigem Natriumsulfid unter reduziertem Druck.
Aus dem Stand der Technik sind bereits Verfahren bekannt, um aus Na₂S·9H₂O, Na₂S·6H₂O oder Na₂S·5H₂O ein wasserfreies Natriumsulfid herzustellen.
Gemäß EP-B-0345 136 stellt man in der ersten Dehydratisierungsstufe das Monohydrat her. Für die Entwässerung benötigt man eine Zeit von 2 Stunden und mehr.

Das restliche, im Monohydrat enthaltene Wasser entfernt man dann bei einer Temperatur von 90 bis 200 ° C und einem reduzierten Druck von ca. 2,66 kPa (20 Torr) bis 66,5 kPa (500 Torr).

Ein ähnliches, zweistufiges Verfahren zur Herstellung von kristallinem wasserfreiem Natriumsulfid wird in der EP-B 0361 998 beschrieben.

Der Nachteil dieser bekannten Verfahren besteht darin, daß man die vollständige Umsetzung z. B. zum Monohydrat in der ersten Stufe abwarten muß (EP-B - 0345 136), bevor man diese Verbindung der zweiten Temperaturstufe zuführen kann.

Als auf dem Markt verfügbares Produkt findet man ein wasserhaltiges Natriumsulfid mit einem Na₂S-Anteil von insbesondere 60 bis 62 %. Nach stöchiometrischer Berechnung entspricht dies in etwa dem Na₂S·3H₂O.

Durch das Einleiten von Schwefelwasserstoff in konzentrierte Natronlauge entsteht bei Temperaturen über 100 ° C eine Natriumsulfidhydratschmelze mit einem Gehalt von ca. 60 % bis 62 % Na₂S.
Diese wird auf ein Kühlband aufgetragen, auf dem sie erstarrt (T <90 ° C). Nach der Zerkleinerung erhält man im allgemeinen einen schuppenförmiges Produkt, das dann marktüblich verfügbar ist.

Aufgabe der Erfindung ist es, ein Verfahren bereitzustellen, mit dessen Hilfe man ein weitestgehend wasserfreies Natriumsulfid erhält.

Gegenstand der Erfindung ist ein Verfahren zur Herstellung von wasserfreiem Natriumsulfid durch Erhitzen von wasserhaltigem Natriumsulfid unter reduziertem Druck dadurch gekennzeichnet, daß man Natriumsulfid mit einem Wassergehalt von 35 bis 45 %, insbesondere 38 bis 40 % unter Mischen durch eine Vorrichtung fördert, in der die Temperatur des eingespeisten Na₂S-Hydrats (Produkttemperatur) von ca. 20 ° C am Ort der Feststoffeinspeisung auf ≥180 ° C am Feststoffauslaß stetig ansteigt, und gleichzeitig ein Unterdruck von <26,66 mbar (<20 Torr) eingehalten wird und das Verfahren kontinuierlich durchgeführt wird.

Auf diesem Weg verhindert man das unerwünschte Aufschmelzen des zu entwässernden Materials.
Bevorzugt wird während des Dehydratisierungsprozesses ein Druck <14,66 mbar (<11 Torr) eingehalten.
Für das erfindungsgemäße Verfahren setzt man vor allen Kontakttrockner ein.

Darunter versteht man Apparaturen, bei denen die Wärme von einer Heizfläche an den mit dieser in Kontakt befindlichen Feststoff übertragen wird.

Dazu gehören beispielsweise Schaufeltrockner und Tellertrockner, wobei erstere im allgemeinen diskontinuierlich und letztere kontinuierlich betrieben werden.

Als besonders geeignet haben sich Tellertrockner erwiesen, die senkrecht installiert werden.

In diesen Apparaten werden die von oben nach unten angeordneten Teller in drei und mehr Tellerpakete unterschiedlicher Temperaturzonen zusammengefaßt. Die Feststofftemperatur im ersten Paket hinter dem Ort der Feststoffeinspeisung liegt dabei zwischen 20 und 70 ° C, die Feststofftemperatur (Produkttemperatur) vor dem Feststoffauslaß beträgt mehr als 180 ° C.

Bevorzugt setzt man das wasserhaltige Na₂S in Schuppen-, Plättchen- oder Flakesform mit einer Kantenlänge von 5 bis 8 mm ein.

Erfindungsgemäß gelingt es, die Verweilzeit des zu dehydratisierenden Natriumsulfids im Trocknungsvorgang im Vergleich zum Stand der Technik deutlich zu reduzieren und ein Verfahren zur Dehydratisierung zur Verfügung zu stellen, das kontinuierlich durchzuführen ist.
Insbesondere bei Einsatz eines kontinuierlich betriebenen Vakuum-Tellertrockners erhält man so ein wasserfreies Natriumsulfid mit einem Gehalt von mindestens 98, bevorzugt 99 Gew.-% Na₂S bereits nach Verweilzeiten im Trockner von ≥ 90 min.

### Beispiel

Ein Massenstrom von 300 bis 400 kg/h Na₂S mit einem Wasseranteil von 38 bis 40 Gew.-% in Schuppenform mit einer Kantenlänge der Schuppen von 5 bis 8 mm wird in einen Vakuum-Tellertrockner eingespeist, in dem ein Vakuum von <15 mbar gehalten wird.

Das Rohprodukt durchläuft diesen Trockner mäanderförmig von oben nach unten, wird dabei aufgeheizt und gibt das als Hydrat gebundene Wasser ab.

Folgende Randbedingungen gelten:
- Die einzelnen Heizteller werden zu drei Tellerpaketen zusammengefaßt, wobei die Feststofftemperatur im obersten Tellerpaket von ca. 20 ° C auf ca. 70 ° C ansteigt und die Temperatur des Feststoffs bei Austritt am Feststoffauslaß am Ende des dritten Pakets bei ≥180 ° C liegt. Die Durchlaufzeit durch den Trockner beträgt ≥90 min.

Die Ausgangsverbindungen bzw. die abtrocknenden Produkte werden auf den Tellern regelmäßig umgeschichtet.

Man erhält auf diesem Weg ein Produkt mit einem Gehalt von mehr als 99 Gew.-% Na₂S.

## Patentansprüche

1. Verfahren zur Herstellung von wasserfreiem Natriumsulfid durch Erhitzen von wasserhaltigem Natriumsulfid unter reduziertem Druck
**dadurch gekennzeichnet,**
**daß** man Natriumsulfid mit einem Wassergehalt von 35 bis 45 % unter Mischen durch eine Vorrichtung fördert, in der die Produkttemperatur von ca. 20 ° C am Ort der Feststoffeinspeisung auf ≥ 180 ° C am Feststoffauslaß stetig ansteigt, wobei gleichzeitig ein Unterdruck von <26,66 mbar (<20 Torr), bevorzugt <14,66 mbar (<11 Torr) eingehalten wird und das Verfahren kontinuierlich durch geführt wird.

2. Verfahren gemäß Anspruch 1,
**dadurch gekennzeichnet,**
**daß** man als Vorrichtung einen Kontakttrockner einsetzt.

3. Verfahren gemäß den Ansprüchen 1 und 2,
**dadurch gekennzeichnet,**
**daß** man als Vorrichtung einen Tellertrockner einsetzt.

4. Verfahren gemäß Anspruch 3,
**dadurch gekennzeichnet,**
**daß** man die Teller in 3 oder mehr Temperaturzonen zugeordneten Pakete zusammenfaßt, wobei die Produkttemperatur im ersten Paket zwischen 20 und 70 ° C liegt und die Produkttemperatur vor dem Feststoffauslaß mehr als 180 ° C beträgt.

5. Verfahren gemäß einem oder mehreren der Ansprüche 1 bis 4,
**dadurch gekennzeichnet,**
**daß** man das wasserhaltige Natriumsulfid in zerkleinerter Form, bevorzugt in Schuppen-, Plättchenoder Flakesform mit Kantenlänge von 5 bis 8 mm einsetzt.

6. Verfahren nach einem oder mehreren der Ansprüche 1 bis 5,
**dadurch gekennzeichnet,**
**daß** man ein wasserfreies Natriumsulfid mit einem Gehalt von mindestens 98, bevorzugt 99 Gew.-% Na₂S, erzeugt.

## Claims

1. Process for the preparation of anhydrous sodium sulfide by heating water-containing sodium sulfide under reduced pressure,
**characterised in that**
sodium sulfide having a water content of from 35 to 45 % is conveyed, with mixing, through an apparatus in which the product temperature rises constantly from approximately 20°C at the point at which the solid is fed in to ≥ 180°C at the solid outlet, a low pressure of < 26.66 mbar (< 20 torr), preferably < 14.66 mbar (< 11 torr), simultaneously being maintained and the process being carried out continuously.

2. Process according to claim 1,
**characterised in that**
a contact drier is used as the apparatus.

3. Process according to claims 1 and 2,
**characterised in that**
a plate drier is used as the apparatus.

4. Process according to claim 3,
**characterised in that**
the plates are combined into sets assigned to three or more temperature zones, the product temperature in the first set being from 20 to 70°C and the product temperature in front of the solid outlet being greater than 180°C.

5. Process according to one or more of claims 1 to 4,
**characterised in that**
the water-containing sodium sulfide is used in comminuted form, preferably in the form of scales, lamellae or flakes having an edge length of from 5 to 8 mm.

6. Process according to one or more of claims 1 to 5,
**characterised in that**
an anhydrous sodium sulfide having a content of at least 98 wt.%, preferably 99 wt.%, Na₂S is produced.

## Revendications

1. Procédé de fabrication de sulfure de sodium anhydre par chauffage de sulfure de sodium hydraté sous pression réduite,
**caractérisé en ce qu'**
on transporte du sulfure de sodium ayant une teneur en eau de 35 à 45 % sous mélange à travers un dispositif dans lequel la température de produit s'élève d'environ 20°C à l'endroit où l'alimentation en matière solide ≥ 180°C à la sortie de matière solide d'une manière continue, dans lequel on maintient en même temps une dépression de <26,66 mbar (< 20 Torr), de préférence de < 14,66 mbar (< 11 Torr) et **en ce que** le procédé est effectué en continu.

2. Procédé selon la revendication 1,
**caractérisé en ce qu'**
on met en oeuvre comme dispositif un séchoir par contact.

3. Procédé selon l'une quelconque des revendications 1 et 2,
**caractérisé en ce qu'**
on met en oeuvre comme dispositif un séchoir à plateaux.

4. Procédé selon la revendication 3,
**caractérisé en ce qu'**
on rassemble les plateaux en paquets disposés en 3 ou davantage de zones de température dans lequel la température de produit dans le premier paquet se situe entre 20°C et 70°C et la température de produit avant la décharge de solide s'élève à plus de 180°C.

5. Procédé conformément à l'une quelconque des revendications 1 à 4,
**caractérisé en ce qu'**
on met en oeuvre le sulfure de sodium hydraté sous forme broyée, de préférence sous forme d'écailles, de plaquettes ou de flacons ayant une longueur d'arêtes allant de 5 à 8 mm.

6. Procédé selon l'une quelconque des revendications 1 à 5,
**caractérisé en ce qu'**
on produit un sulfure de sodium anhydre ayant une teneur d'au moins 98, de préférence 99 % en poids de SNa₂.
